# EUROPEAN PATENT APPLICATION

(11) **EP 4 470 822 A1**
(43) Date of publication of application: **04.12.2024**
(21) Application number: 23176540.5
(22) Date of filing: 31.05.2023
(51) Int. Cl.: B60L 53/14, B60L 53/16, B60L 53/30, B60L 55/00

(54) **CHARGING SYSTEM FOR ELECTRIC VEHICLES WITH MULTIPLE CHARGING PORTS**

(71) Applicant: Aptiv Technologies AG, 8200 Schaffhausen (CH)
(72) Inventor: TOKARZ, Krzysztof, Dublin 2 (IE); SZUMNY, Pawel, Dublin 2 (IE)
(74) Representative: Lewis Silkin LLP

(57) **Abstract**

A charging system for an electric vehicle for use with an external charger at a charging station. The charging system comprising an electronic control unit (26), a first charging port (22) electrically connected to the electronic control unit (26) by a first power line communication connection (28), and a second charging port (24) electrically connected to the electronic control unit (26) by a second power line communication connection (30). The electronic control unit (26) is configured to detect a connection of the external charger to either of the first or second charging port (22,24) and activate the respective first or second charging port (22,24) for charging the electric vehicle.

## Description

### Field

The present invention relates to a charging system for an electric vehicle.

### Background

Electric vehicles (EVs), such as battery electric vehicles (BEVs) or plug-in hybrid vehicles (PHEVs), typically require charging from an external power source. These charging sources can be found at charging stations and usually require a cable to be plugged into the vehicle's charging inlet. EVs with multiple charging inlets ports, or inlets, (e.g., located at the front and rear of the vehicle) typically require separate electronic control unit (ECU) gateways for each inlet. This can add complexity to the vehicle's architecture and increase manufacturing costs.

Charging of EVS is defined by an international standard of vehicle-to-grid communication, which enables bidirectional communication between the EV and the charging station using powerline communication (PLC). This allows for the transfer of data and commands between the vehicle and the charging station through the charging cable without the need for additional communication hardware. The use of PLC communication allows for secure and reliable communication between the vehicle and the charging station, as the charging cable acts as a secure and shielded communication channel. One of the key advantages of using PLC communication is its compatibility with existing power grids and infrastructure. Since PLC uses the existing power lines for communication, it eliminates the need for additional communication hardware and can easily be integrated into existing charging infrastructure. This can reduce the cost and complexity of deploying EV charging stations. Another advantage of using PLC communications is its ability to support high-speed communication, which enables faster and more efficient charging. This can help reduce the time required to charge an EV, making it more convenient and appealing for consumers.

To provide more flexibility and convenience to the user, EVs are often fitted with two charging ports. However, by providing two charging ports, there is an additional cost in manufacturing the EVs. Further, having two charging ports, each requiring a vehicle-to-grid (V2G) gateway ECU, makes the charging system more complex and requires more maintenance which is time consuming and expensive. Furthermore, having two ECUs requires more space in the vehicle and increases the weight, which impacts the design and cost of the EVs.

Accordingly, whilst two charging ports provides flexibility and convenience for the user, there is a need to provide a more efficient and effective charging system for electric or plug-in hybrid vehicles with multiple charging inlets whilst remaining compatible with the existing communication standards.

### Summary

In light of the above, the present invention seeks to provide a simplified charging system the reduces the number of electronic parts within an EV. Consequently, the EV may have a lower cost of manufacture and assembly, as well as easier and quicker maintenance of the EV.

Broadly, a charging system is disclosed according to claim 1. Particularly, the use of an electronic control unit electrically connected to the first and second charging ports eliminates the requirement of having two separate electronic control unit in an EV. The charging system determines to which charging port an external charger has been connected and enables power line communication between the charging station and the vehicle.

According to one aspect of the invention, there is provided a charging system for an electric or plug-in hybrid vehicle for use with an external charger at a charging station. The charging system comprising a electronic control unit, a first charging port electrically connected to the electronic control unit by a first power line communication connection, and a second charging port electrically connected to the electronic control unit by a second power line communication connection. The electronic control unit is configured to detect a connection of the external charger to either of the first or second charging port and activate the respective first or second charging port for charging the electric vehicle. In this way, the need for two electronic control units, one for each charging port, is eliminated thereby saving costs associated with manufacturing the EV and simplifying the charging system.

In one form, wherein the electronic control unit is coupled to a first proximity pilot line of the first charging port and a second proximity pilot line of the second charging port. In this way, the electronic control unit can detect which charging port an external vehicle charger has been connected to from the charging station.

In one form, the electronic control unit is configured to receive a connection signal from the first proximity pilot and the second proximity pilot line indicative of the connection of the external charger to the first or second charging port. In this way, the first charging port or the second charging port can be activated independently and to ensure that the first charging port or the second charging port are not activated by accident. In addition, the microcontroller can determine, by way of the signal received from the first proximity pilot and/or the second proximity pilot, which charging port an external vehicle charger has been connected to from the charging station.

In one form, the electronic unit comprises a switching circuit operable for selecting the first or second charging port to be activated in response to a charge connection signal. In this way, the first charging port or the second charging port can be activated or deactivated, and to ensure that no signal is transmitted from the deactivated charging port.

In one form, the switching circuit comprises a first driver circuit and a second driver circuit. The first driver circuit electrically connected to the first power line communication connection. The second driver circuit electrically connected to the second power line communication connection. In this way, the first driver circuit and second driver circuit are connected to independent driver circuits enabling control of which charging port is activated.

In one form, the switching circuit comprises a first solid state relay and a second solid state relay. The first solid state relay electrically connected to the first power line communication connection. The second solid state relay electrically connected to the second power line communication connection. Advantageously, solid state relays no mechanical parts and have reduced wear.

In one form, the electronic control unit is configured to send a control signal to either the first driver or second driver to activate either the first charging port or the second charging port. In this way, the first charging port or the second charging port can be activated independently by the microcontroller unit to ensure that the first charging port or the second charging port are not activated by accident.

In one form, the electronic control unit comprises a power line communication modem electrically coupled to an output of the first driver circuit and the second driver circuit by a third power line communication connection. The power line modem configured to communicate with the charging station. In this way, the first power line communication connection or the second power line communication connection can be electrically connected to the third power line communication connection so that the charging port can communicate with the ECU of the EV.

In one form, the microcontroller unit is configured to send a control signal to the first driver circuit or the second driver circuit to either activate or deactivate the first charging port or the second charging port. In this way, the first charging port or the second charging port can be activated independently by the microcontroller unit to ensure that the first charging port or the second charging port are not activated by accident.

In one form, the switching circuit comprises a control signal configured to electrically connect the first power line communication with a third power line communication connection, or to electrically connect the second power line communication connection with the third power line communication connection. The third power line communication is electrically connected to the electronic control unit. In this way, the first power line communication connection or the second power line communication connection can be electrically connected to the third power line communication connection so that the charging port can communicate with the ECU of the EV.

In one form, the first driver circuit comprises a first driver, and the second driver circuit comprises a second driver. The first driver electrically connected to a first MOSFET configuration. The second driver electrically connected to a second MOSFET configuration. In this way, the MOSFET configurations ensure that current flow is prevented in the forward and reverse directions if the first driver or the second driver are not activated.

In one form, the first driver is electrically coupled to the first power line communication connection, and the second driver is electrically coupled to the second power line communication connection. In this way, the first charging port or the second charging port can be activated independently by the microcontroller unit to ensure that the first charging port or the second charging port are not activated by accident.

In one form, the switching circuit comprises a control signal configured to electrically connect the first power line communication with a third power line communication connection, or to electrically connect the second power line communication connection with the third power line communication connection. The third power line communication is electrically connected to the electronic control unit. In this way, the first power line communication connection or the second power line communication connection can be electrically connected to the third power line communication connection so that the charging port can communicate with the ECU of the EV.

In one form, the first driver circuit comprises a first MOSFET configuration and a first driver. The second driver circuit comprises a second MOSFET configuration and a second driver. In this way, the MOSFET configurations ensure that current flow is prevented in the forward and reverse directions if the first driver or the second driver are not activated.

In one form, the first and second MOSFET configuration each comprises two MOSFETS connected back-to-back. In this way, the back-to-back connection of the MOSFETs in the first and second MOSFET configuration ensures that the first power line communication connection or the second power line communication connection cannot be activated by accident, or if the MCU does not send a control signal.

### Brief Description of Drawings

Illustrative embodiments will now be described with reference to the accompanying drawings in which:
Figure 1 illustrates a plan view of a prior art EV charging system with two ECUs;
Figure 2 illustrates a plan view of a charging system and with a electronic control unit according to one aspect of the present disclosure;
Figure 3 illustrates a schematic circuit for the charging system; and
Figure 4 illustrates a further schematic circuit for the charging system.

### Detailed Description

The following description presents exemplary embodiments and, together with the drawings, serves to explain principles of the invention. However, the scope of the invention is not intended to be limited to the precise details of the embodiments or exact adherence with all features and/or method steps of implementation, since variations will be apparent to a skilled person and are deemed also to be covered by the description. Terms for components used herein should be given a broad interpretation that also encompasses equivalent functions and features. In some cases, several alternative terms (synonyms) for structural features, sometimes separated by a "/", have been provided but such terms are interchangeable and not intended to be exhaustive. Descriptive terms should also be given the broadest possible interpretation; e.g. the term "comprising" as used in this specification means "consisting at least in part of" such that interpreting each statement in this specification that includes the term "comprising", features other than that, in addition to, or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction. Therefore, all directional terms are merely relative to each other.

The description herein refers to embodiments with particular combinations of steps or features, however, it is envisaged that further combinations and crosscombinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

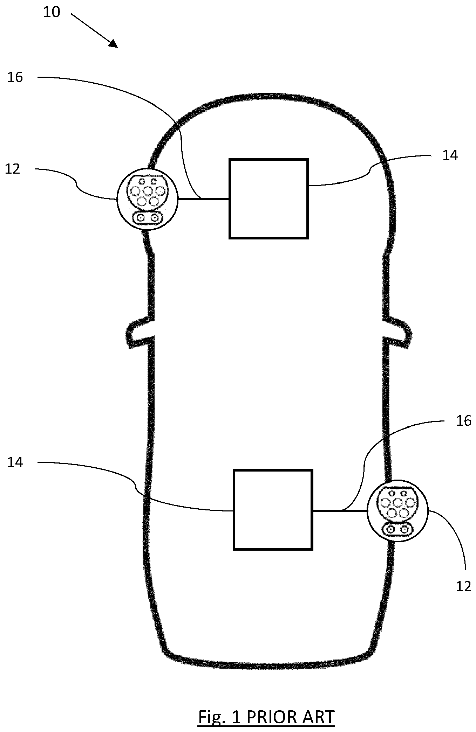

Figure 1 shows a charging port arrangement of an EV having two charging ports 12 at the front and rear of the vehicle 10. Each charging port includes a vehicle-to-grid (V2G) gateway electronic control unit (ECU) 14. The charging port is electronically connected to the V2G gateway ECU by a PLC line 16. As such, conventional EVs include two V2G gateway ECUs 14, which operate independently. As such, the present invention is directed to overcoming the problems associated with the charging systems of Figure 1.

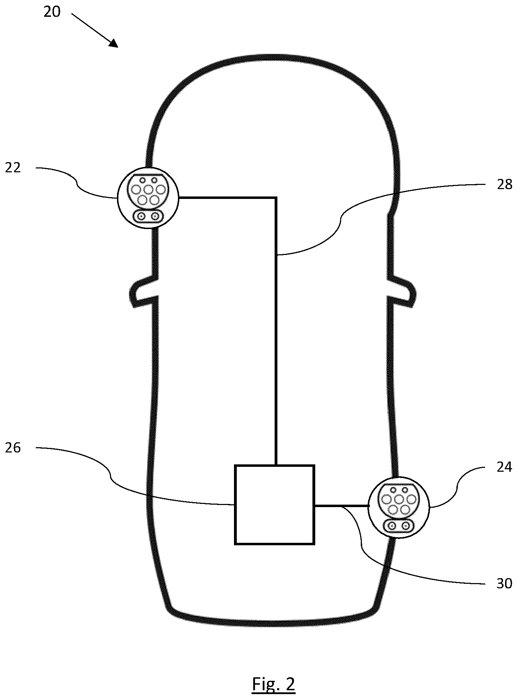

Referring to Figure 2, the present invention provides a charging switch system for EVs 20 with multiple charging ports 22,24 connected to a single ECU gateway 26 with two inputs for power line communication (PLC). The term ECU gateway is interchangeable with the term ECU. The ECU gateway 26 is electrically connected to the first charging port 22 by a first PLC line 28 and the second charging port 24 by a second PLC line 30. On connection of an external charging cable to either the first or second charging port, the ECU gateway establishes a connection with the charging station and enables the charging of the vehicle's battery by the charging station.

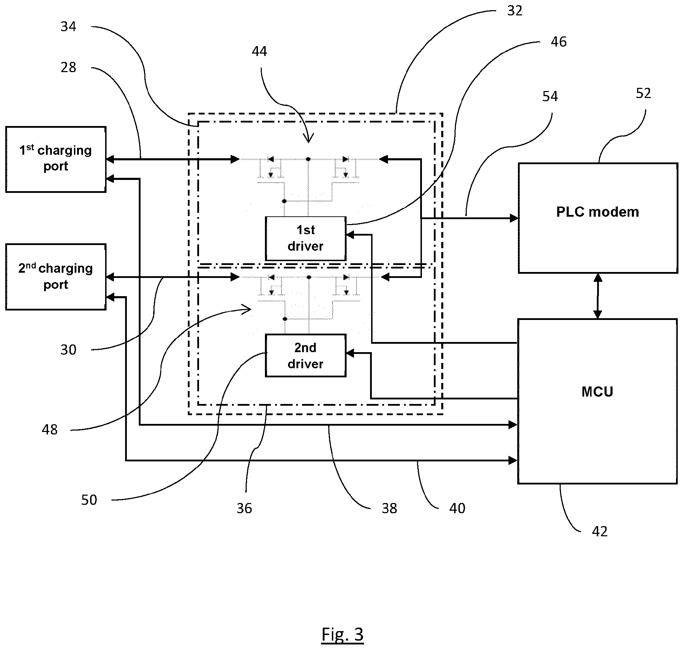

Referring to Figure 3, the charging switch system further comprises a switching circuit 32 with a first driver circuit 34 and a second driver circuit 36, each of which are electrically connected to the first PLC line 28 and second PLC line 30, respectively. The switching circuit 32 is operable for selecting the first or second charging ports (22,24) to be activated in response to a charge connection signal. Additionally, the charging switch system comprises a proximity pilot (PP) line 38,40 that enables charge cable detection and current limitation. The switching circuit 32 enables the activation of either the first charging port 22 or the second charging port 24, depending on which PP line 38,40 is connected to the external charger.

The ECU gateway 26 comprises a microcontroller unit 42, which is configured to receive a connection signal from the first PP line 38 and the second PP line 40 to determine which of the first charging port 22 or second charging port 24 has an external charger connected. The microcontroller unit 42 sends a control signal to either the first driver circuit 34 or the second driver circuit 36 to activate either the first charging port 22 or the second charging port 24.

The first driver circuit comprises a first MOSFET configuration 44 and a first driver 46, and the second driver circuit comprises a second MOSFET configuration 48 and a second driver 50. The first MOSFET configuration 44 and the second MOSFET configuration 48 each comprise two MOSFETs connected back-to-back. MOSFETs connected back-to-back allow current to flow in both directions through the circuit. By connecting two MOSFETs back-to-back, the circuit can be switched on and off in either direction.

The charging switch system further comprises a power line communications (PLC) modem 52, which is electrically connected to an output of the first driver circuit 34 and the second driver circuit 36 by a third PLC connection 54. The PLC modem 52 is configured to communicate with the charging station by either the first or second charging port 22,24. Communication between the PLC modem 52 and the charging station can be via wired or wireless communication. For wired communication, the international standard supports the use of a Controller Area Network (CAN), Ethernet, and/or USB. For wireless communication, the international standard supports the use of Bluetooth, Wi-Fi, and cellular data. Preferably, communication between the PLC modem 52 and the charging station occurs through wired communication. The microcontroller unit 42 is configured to send a control signal to the first driver circuit 34 or the second driver circuit 36 to either activate, or deactivate, the first charging port 22 or the second charging port 24.

In operation, when an external charger is connected to either the first charging port 22 or second charging port 24, the MCU 42 uses the PP line 38,40 to determine which PLC line 28,30 to activate. Once the MCU 42 determines which charging port an external charger has been connected to, the MCU 42 sends a control signal to the first driver 46 or the second driver 50. For example, if an external charger is connected to the first charging port 22, the MCU 42 determines, using the first PP line 38, that the first charging port 22 should be used. The MCU 42 sends a control signal to the first driver 46 to activate the first driver circuit 34. As such, the first driver circuit 34 will be used to transmit the PLC communication from the first charging port 22 to the PLC modem 52. No control signal will be sent to the second driver 50 of the second driver circuit 36 and the second charging port 24 will not be electronically connected to the PLC modem 52.

The first driver circuit 34 and second driver circuit 36 act as switches that are "off" until they are activated by the control signal transmitted by the MCU 42. Due to the back-to-back configuration of the first MOSFET configuration 44 and the second MOSFET configuration 48, current flow is prevented in the forward and reverse directions if the first driver 46 or the second driver 50 are not activated. The back-to-back configuration of the first MOSFET configuration 44 and the second MOSFET configuration 48 ensures that the first PLC line 28 or the second PLC line 30 cannot be activated by accident, or if the MCU 42 does not send a control signal.

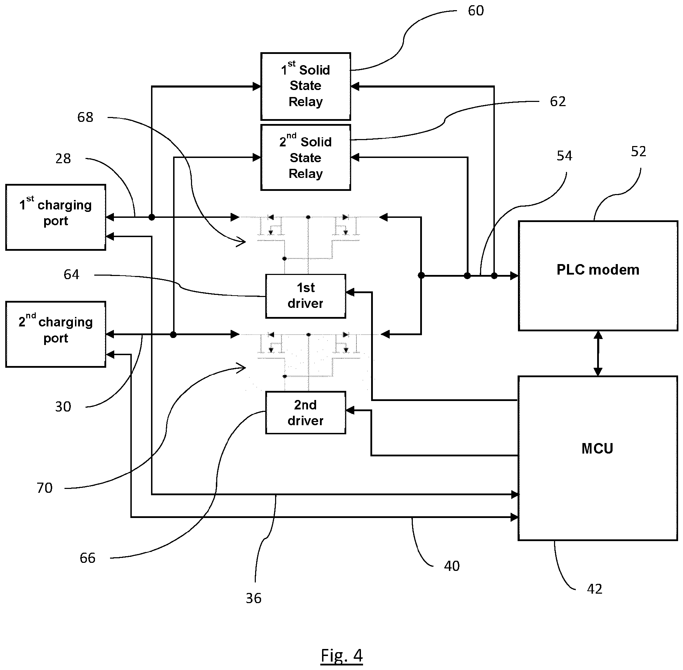

Referring to Figure 4, in another arrangement of this disclosure, an alternative charging switch system comprises a first solid state relay (SSR) 60 and a second SSR 62. Advantageously, SSRs have no mechanical parts and have reduced wear. In addition, the charging switch system comprises a first driver 64 and a second driver 66. The first driver 64 and the second driver 66 are electronically connected to a first MOSFET configuration 68 and a second MOSFET configuration 70, respectively. A control signal is transmitted to activate either the first PLC line or a second PLC line. When the control signal is at a LOW state, the first PLC line 28 is electrically connected to the third PLC line 54. When the control signal is at a HIGH state, the second PLC line 30 is electrically connected to the third PLC line 54. The third PLC line 54 is an output of the switching circuit 32 and enables the ECU gateway 26 to communicate with other electrical components of the electric vehicle via the PLC modem 52.

The present invention provides galvanic isolation between the control signal and the PLC line, which prevents DC, and unwanted AC, currents between charging ports 22,24 and the ECU while allowing signal and power transfer between those two parts. Further, the charging switch system allows the switching between a high positive voltage and a high negative voltage. Furthermore, the charging switch system provides low insertion losses, high reliability, and simplification of the EV architecture.

Although an overview of the inventive subject matter has been described with reference to specific example embodiments, various modifications and changes may be made to these embodiments without departing from the broader scope defined by the appended claims.

## Claims

1. A charging system for an electric vehicle for use with an external charger at a charging station, the charging system comprising:
an electronic control unit;
a first charging port electrically connected to the electronic control unit by a first power line communication connection; and
a second charging port electrically connected to the electronic control unit by a second power line communication connection;
wherein the electronic control unit is configured to detect a connection of the external charger to either of the first or second charging port and activate the respective first or second charging port for charging the electric vehicle.

2. The charging system according to claim 1, wherein the electronic control unit is coupled to a first proximity pilot line of the first charging port and a second proximity pilot line of the second charging port.

3. The charging system according to claim 2, wherein the electronic control unit is configured to receive a connection signal from the first proximity pilot and the second proximity pilot line indicative of a connection of the external charger to the first or second charging port.

4. The charging system according to any preceding claim, wherein the electronic unit comprises a switching circuit operable for selecting the first or second charging ports to be activated in response to a charge connection signal.

5. The charging system according to claim 4, wherein the switching circuit comprises a first driver circuit and a second driver circuit, the first driver circuit electrically connected to the first power line communication connection, and the second driver circuit electrically connected to the second power line communication connection.

6. The charging system according to claim 4 or 5, wherein the switching circuit comprises a first solid state relay and a second solid state relay, the first solid state relay electrically connected to the first power line communication connection, and the second solid state relay electrically connected to the second power line communication connection.

7. The charging system according to claim 5 or 6, wherein the electronic control unit is configured to send a control signal to either the first driver or second driver to activate either the first charging port or the second charging port.

8. The charging system according to any preceding claim, wherein the electronic control unit comprises a power line communication modem electrically coupled to an output of the first driver circuit and the second driver circuit by a third power line communication connection, the power line modem configured to communicate with the charging station.

9. The charging system according to any one of claims 5 to 8, wherein the electronic control unit is configured to send a control signal to the first driver circuit or the second driver circuit to activate the first charging port or the second charging port.

10. The charging system according to any one of claims 4 to 9, wherein the switching circuit comprises a control signal configured to electrically connect the first power line communication connection with a third power line communication connection, or to electrically connect the second power line communication connection with the third power line communication connection, wherein the third power line communication is electrically connected to the electronic control unit.

11. The charging system according to any one of claims 5 to 10, wherein the first driver circuit comprises a first driver, and the second driver circuit comprises a second driver, the first driver electrically connected to a first MOSFET configuration, and the second driver electrically connected to a second MOSFET configuration.

12. The charging system according to claim 11, wherein the first driver is electrically coupled to the first power line communication connection, and the second driver is electrically coupled to the second power line communication connection.

13. The charging system according to any one of claims 5 to 12, wherein the first driver circuit further comprises a first MOSFET configuration, and the second driver circuit further comprises a second MOSFET configuration.

14. The charging system according to claim 13, wherein the first and second MOSFET configuration each comprises two MOSFETS connected back-to-back.
